# EUROPÄISCHE PATENTSCHRIFT

(11) **EP 3 673 263 B1**
(45) Veröffentlichungstag und Bekanntmachung des Hinweises auf die Patenterteilung: **21.07.2021**
(21) Anmeldenummer: 18753428.4
(22) Anmeldetag: 21.08.2018
(51) Int. Cl.: G01N 30/90, H01J 49/04, G01N 30/94, G01N 30/95, G01N 1/38, G01N 1/34, G01N 1/28, G01N 1/40

(54) **VERFAHREN ZUR BEREITSTELLUNG EINER SUBSTANZMENGE**
METHOD FOR PROVIDING A SUBSTANCE AMOUNT
PROCÉDÉ DE FOURNITURE D'UNE QUANTITÉ DE SUBSTANCE

(30) Priorität: 24.08.2017 EP 17187746
(43) Veröffentlichungstag der Anmeldung: 01.07.2020
(73) Patentinhaber: Merck Patent GmbH, 64293 Darmstadt (DE)
(72) Erfinder: HEUB, Sarah, 1400 Yverdon-les-Bains (CH); HORISBERGER, Aurèle, 1022 Chavannes-près-Renens (CH); FAYE, Younouss, 1470 Estavayer-le-Lac (CH); ORHAN, Jean-Baptiste, 1350 Orbe (CH); MARTI, Olivier, 1417 Essertines-sur-Yverdon (CH)
(86) Internationale Anmeldenummer: PCT/EP2018/072473
(87) Internationale Veröffentlichungsnummer: WO 2019/038245

(56) Entgegenhaltungen:
- EP-A2- 1 302 768
- GB-A- 2 067 126
- US-A- 5 208 458
- US-A1- 2003 236 471
- US-A1- 2006 160 127

## Beschreibung

Die Erfindung betrifft ein Verfahren zur Bereitstellung einer Substanzmenge einer zu analysierenden Probe von einer Dünnschichtplatte bei der Dünnschicht-Chromatografie, wobei die Substanzmenge von der Dünnschichtplatte abgetragen und einer Probenkammer zugeführt wird.

Bei der Dünnschicht-Chromatografie wird eine zu analysierende Probe auf einen Ausgangsbereich einer Dünnschichtplatte aufgebracht. Die Dünnschichtplatte weist eine üblicherweise formstabile Trägerplatte auf, die mit einem festen und typischerweise feinporigen und/oder partikulären Trennmaterial wie beispielsweise Kieselgel beschichtet ist. Nach dem Aufbringen der zu analysierenden Probe in den Ausgangsbereich wird der Dünnschichtplatte ein Fließmittel zugeführt, das zunächst durch den Ausgangsbereich der zu analysierenden Probe und anschließend durch eine sich längs der Dünnschichtplatte erstreckende Trennstrecke in dem Trennmaterial wandert. Dabei wird die in dem Ausgangsbereich aufgebrachte Probe von dem Fließmittel mitgeführt. Je stärker eine Wechselwirkung zwischen der Probe bzw. einzelnen Komponenten der Probe und dem Trennmaterial ist, umso langsamer wandert die Probe bzw. wandern die einzelnen Komponenten der Probe mit dem Fließmittel über die Trennstrecke. Auf diese Weise kann durch unterschiedliche Wandergeschwindigkeiten eine räumliche Auftrennung zwischen verschiedenen Proben oder zwischen verschiedenen Probenkomponenten einer Probe erfolgen. Die einzelnen Proben oder die einzelnen Probenkomponenten können nach der räumlichen Auftrennung über die Trennstrecke unabhängig voneinander mit geeigneten Untersuchungen und Messgeräten ausgewertet und beispielsweise identifiziert werden.

Um die über die Trennstrecke verteilte Probe analysieren zu können, sind verschiedene Verfahren bekannt. Bei hierfür geeigneten Proben kann deren Nachweis beispielsweise mit Farbreaktionen oder durch optische Analysen erfolgen. Für andere Analysen muss aus einem vorgegebenen Bereich der Trennstrecke eine Substanzmenge der zu analysierenden Probe von der Dünnschichtplatte gelöst und einer Messvorrichtung zugeführt werden. Üblicherweise wird dazu in einem vorgegebenen Bereich auf der Trägerplatte die darauf befindliche Trennschicht mit dem Trennmaterial und dem darin befindlichen Probenmaterial von der Trägerplatte abgetragen und eluiert, bzw. in Lösung gebracht, wobei das Trennmaterial bei der nachfolgenden Auswertung nicht berücksichtigt wird. Um eine Substanzmenge einer zu analysierenden Probe von der Dünnschichtplatte zu lösen, sind ebenfalls verschiedene Verfahren und Vorrichtungen entwickelt worden.

Aus der Praxis ist beispielsweise bekannt, dass mit einem intensiven Laserstrahl gezielt vorgegebene Bereiche der Dünnschichtplatte bestrahlt und dadurch das dort befindliche Trennmaterial zusammen mit dem darin enthaltenen Probenmaterial von der Trägerplatte abgetragen wird. Der Laserstrahl kann auf einen sehr kleinen Bereich fokussiert werden, so dass eine gute räumliche Auflösung bei der Abtragung einer Substanzmenge von der Dünnschichtplatte erzielt werden kann. Es hat sich jedoch gezeigt, dass eine quantitative Analyse kaum möglich ist und insbesondere bei Proben, die mehrere verschiedene Komponenten enthalten, deren Reaktion auf den Laserstrahl und dadurch bedingt deren Abtragungsverhalten deutlich unterschiedlich sein kann, so dass eine nachfolgende Analyse und Auswertung verfälscht werden kann.

Aus der Praxis ist es weiterhin bekannt, dass ein Hohlzylinder mit einer an einem offenen Ende des Hohlzylinders angeordneten ringförmigen Dichtung von oben auf die Dünnschichtplatte angedrückt wird und mit der ringförmigen Dichtung einen Probenbereich auf der Trennschicht begrenzt und abdichtet. In den Hohlraum des Hohlzylinders wird ein Lösungsmittel eingebracht, das in dem von der ringförmigen Schneide begrenzten Probenbereich eine Substanzmenge der zu analysierenden Probe aus der Trennschicht herauslöst oder aber einen Anteil des Trennmaterials zusammen mit der darin eingebetteten Probe aus der Trennschicht herauslöst. Das mit der Substanzmenge der zu analysierenden Probe angereicherte Lösungsmittel kann dann einem Messgerät zugeführt werden. Nachteil dieser Methode ist die oft unzureichende Abdichtung des zu analysierenden Probenbereichs, so dass häufig Lösungsmittel und gegebenenfalls darin gelöste Probenbestandteile aus dem begrenzten Probenbereich austreten. Es hat sich gezeigt, dass für unterschiedliche Trennschichten und insbesondere für unterschiedliche Trägerplatten jeweils ein anderer Anpressdruck für den Hohlzylinder mit der ringförmigen Dichtung erforderlich ist, um eine zuverlässige Abdichtung zu bewirken, wodurch die Bereitstellung der Substanzmenge erheblich erschwert und eine häufige individuelle Anpassung im Laboralltag erforderlich wird. Zudem ist oftmals ein derart hoher Anpressdruck für eine als ausreichend erachtete Dichtwirkung notwendig, dass die Beschichtung aus Trennmaterial in der Umgebung der ringförmigen Dichtung beschädigt wird und sich beispielsweise in der Trennschicht Risse bilden oder angrenzende Bereiche der Trennschicht abplatzen. Aus diesem Grund ist ein großer räumlicher Abstand zwischen zwei benachbarten Anordnungen des Hohlzylinders auf der Dünnschichtplatte erforderlich, sodass eng beieinanderliegende Probenbereiche nicht oder nur unvollständig ausgewertet werden können.

Ein weiteres Problem bei der Verwendung von Hohlzylindern mit ringförmigen Dichtungen ist es, dass die Trennschichten eine gleichmäßige Dicke von mindestens 100 µm aufweisen müssen. Bei dünneren Schichtdicken des Trennmaterials auf der Trägerplatte lässt sich auch bei einem vergleichsweise hohen Anpressdruck der ringförmigen Dichtung das durch die ringförmige Dichtung zusammengepresste Trennmaterial nicht mehr ausreichend verdichten, um eine zuverlässige Abdichtung zu bewirken. Im Hinblick auf eine wünschenswert schnelle und mit wenig Probenmaterial durchführbare Dünnschicht-Chromatographie wäre jedoch eine möglichst dünne Trennschicht mit einer Dicke von weniger als 100 µm vorteilhaft, sodass das vorangehend beschriebene Verfahren nicht mehr angewendet werden kann.

Als ein weiterer Nachteil wird die für eine vollständige Herauslösung der Probenmenge benötigte Menge an Lösungsmittel angesehen, die erforderlich ist, um in dem von der ringförmigen Dichtung begrenzten Analysenbereich die dort befindliche Probe aus der Trennschicht herauszulösen. Wenn ein kontinuierlicher Lösungsmittelstrom zunächst an bzw. durch die Trennschicht in dem Analysenbereich hindurchgeführt und anschließend einem Messgerät, beispielsweise einem Massenspektrometer zugeführt wird, werden die einzelnen Messpeaks durch die benötigte Menge des Lösungsmittels und auf Grund der nur allmählichen Lösung der Probe aus der Trennschicht vergleichsweise breit, wodurch deren Auswertung erschwert wird.

Es ist ebenfalls bekannt, eine Kapillare oder Pipettenspitze dicht über die Oberfläche der Dünnschichtplatte heranzuführen und einen Tropfen eines geeigneten Lösungsmittels an der Kapillare herabhängend mit einem Probenbereich auf der Dünnschichtplatte in Kontakt zu bringen. Während einer Kontaktdauer von beispielsweise einigen Sekunden wird aus dem Probenbereich eine Substanzmenge der analysierenden Probe in dem herabhängenden Tropfen gelöst, der anschließend durch die Kapillare hindurch abgesaugt und zusammen mit der darin gelösten Substanzmenge einem Messgerät zugeführt werden kann. Diese Methode kann jedoch nur bei Trennschichten verwendet werden, die ausreichend hydrophobe Eigenschaften aufweisen, damit der Tropfen nicht von der Trennschicht aufgesaugt wird, sondern nach der Herauslösung der Substanzmenge aus dem Bereich der Trennschicht, zu welchem der Tropfen Kontakt hat, wieder durch die Kapillare hindurch abgesaugt werden kann.

Diese aus der Praxis bekannten Verfahren zur Bereitstellung einer Substanzmenge einer zu analysierenden Probe von einer Dünnschichtplatte ermöglichen bereits eine rasche und weitestgehend automatisierte Analyse einer Probe, die auf einer Trennstrecke der Dünnschichtplatte räumlich aufgetrennt wurde. Allerdings wird es als ein Nachteil der aus der Praxis bekannten Verfahren angesehen, dass die für eine einzelne Analyse einer Probe erforderliche Oberfläche der Dünnschichtplatte, von welcher die Substanzmenge für die zu analysierende Probe entnommen wird, eine durch die ringförmige Abdichtung oder durch die Tropfengröße vorgegebene Mindestgröße aufweisen muss, die nicht unterschritten werden kann. Derzeit sind ringförmige Abdichtungen mit einer ovalen Querschnittsfläche von 2 mm x 4 mm oder mit einer kreisförmigen Querschnittsfläche von etwa 4 mm Durchmesser bekannt und üblich. In vielen Fällen stellt sich bei Verwendung der handelsüblichen Apparaturen mit Kapillaren eine Tropfengröße von ebenfalls etwa 2 mm Durchmesser ein, was zu einer oftmals vergleichbar großen Kontaktfläche führt.

In vielen Fällen kann die zu analysierende Probe in der Trennstrecke räumlich wesentlich feiner verteilt werden, als es mit den aus der Praxis bekannten Verfahren zur Bereitstellung einer Substanzmenge der zu analysierenden Probe räumlich aufgelöst werden kann. So würden beispielsweise von dem aus der Kapillare herabhängenden Tropfen mehrere in der Trennstrecke räumlich voneinander abgegrenzte Probenbereiche gleichzeitig erfasst und damit einer einzigen Analyse zugeführt werden.

Aus dem Stand der Technik sind zum Beispiel die Probennahmeverfahren aus den Druckschriften US2006/0160127, US2003/0236471, US5208458, GB2067126 oder EP1302768 bekannt.

Es wird deshalb als eine Aufgabe der vorliegenden Erfindung angesehen, ein Verfahren zur Bereitstellung einer Substanzmenge einer zu analysierenden Probe von einer Dünnschichtplatte so auszugestalten, dass die von der Dünnschichtplatte für Analysen stammende Substanzmenge aus einem räumlich möglichst kleinen und gut definierten Bereich der Dünnschichtplatte entnommen werden kann.

Diese Aufgabe wird erfindungsgemäß dadurch gelöst, dass die Substanzmenge mit einer an einer Aufnahmeöffnung einer Kanüle angeordneten Schneide von einer Oberfläche der Dünnschichtplatte abgetragen und durch die Kanüle der mit der Kanüle verbundenen Probenkammer zugeführt wird. Die Substanzmenge der Probe ist dabei der Anteil der Probe, der sich nach erfolgter Dünnschichtchromatographischer Auftrennung in einem bestimmten Abschnitt des Trennmaterials befindet. Entsprechend des erfindungsgemäßen Verfahrens wird die Substanzmenge der Probe mit dem Abschnitt des Trennmaterials abgetragen, in dem sie sich befindet. Die Kanüle kann eine Hohlnadel sein, bei der ein die Aufnahmeöffnung begrenzender Rand mindestens teilweise als Schneide ausgebildet ist. Es ist ebenfalls denkbar, dass die Aufnahmeöffnung der Kanüle keine Schneide aufweist, sondern beispielsweise stumpf, abgerundet oder trichterförmig aufgeweitet ausgebildet ist, und im Bereich der Aufnahmeöffnung eine gesondert hergestellte Schneide mit der Kanüle verbunden und in geeigneter Weise so ausgerichtet ist, dass eine mit der Schneide von der Dünnschichtplatte abgetragene Substanzmenge durch die Aufnahmeöffnung in die Kanüle eingebracht bzw. eingeführt werden kann. In diesem Fall kann die Kanüle wie eine Kapillare oder ein rohrförmiger Hohlzylinder ausgebildet sein.

Eine Kanüle ist erfindungsgemäß bevorzugt ein dünnes Rohr, ein Schlauch oder eine Hohlnadel, typischerweise aus Kunststoff oder bevorzugt Metall. Typischerweise ist der Durchmesser der Kanüle über ihre Länge konstant. Er kann sich jedoch auch ändern.
Ein Durchmesser der Kanüle kann sehr klein sein und beispielsweise nur einen Millimeter oder weniger, z.B. zwischen 0,3 und 1,5 mm, bevorzugt zwischen 0,5 und 1 mm, betragen. Mit einer sehr dünnen Kanüle und einer Schneide, welche den Öffnungsrand der Aufnahmeöffnung an dem offenen Ende der Kanüle bildet, kann gezielt aus einem sehr kleinen Analysenbereich von beispielsweise 0,5 mm x 1 mm oder weniger die Substanzmenge von der Dünnschichtplatte abgetragen werden. Damit ist auch bei dem Abtragen der für nachfolgende Analysen erforderlichen Substanzmengen von der Dünnschichtplatte eine sehr hohe räumliche Auflösung möglich. Da die Substanzmenge mit Hilfe der Schneide mechanisch abgetragen wird ist für diesen Verfahrensschritt noch kein Lösungsmittel notwendig. Die Überführung der abgetragenen Substanzmenge bzw. der darin enthaltenen Probenmenge in eine Lösung kann zu einem späteren Zeitpunkt mit einer bevorzugt möglichst geringen Menge an Lösungsmittel durchgeführt werden. Auf diese Weise können beispielsweise bei einer nachfolgenden Messung mit einem Massenspektrometer mit einer geringen Menge an Lösungsmittel vergleichsweise scharfe Messpeaks erzeugt werden, wodurch eine einfache und genaue Auswertung begünstigt wird. Die offenbarte Vorrichtung und das erfindungsgemäße Verfahren ermöglichen zudem die Erhöhung der Messempfindlichkeit. Durch die sehr präzise Abtragung definiert kleiner Bereiche bzw. Banden wird die Gefahr der Verunreinigung durch benachbarte Probenbanden verringert. Durch die Möglichkeit, die abgetragene Substanzmenge in einer geringen Lösungsmittelmenge aufzunehmen, können auch geringe Mengen einer Probensubstanz noch messtechnisch erfasst werden, die z.B. bei einer größeren Verdünnung unterhalb der Detektionsgrenze liegen würden.

Es ist ebenfalls denkbar und insbesondere in Kombination mit einer gesondert hergestellten Schneide vorteilhaft, dass die Kanüle einen größeren Durchmesser von beispielsweise zwei, drei oder mehr Millimetern, bevorzugt zwischen 2 und 5 mm, aufweist. Die an der Aufnahmeöffnung der Kanüle angeordnete Schneide weist ihrerseits in vorteilhafter Weise möglichst geringe Abmessungen von beispielsweise einem Millimeter oder weniger auf, um während einer Verlagerung der Schneide auf der bzw. durch die Dünnschichtplatte die durch die Schneide abgetragene Substanzmenge möglichst gering vorgeben zu können. Auf diese Weise ist es möglich, dass durch das Abkratzen oder Herausschneiden von Material aus der Trennschicht der Dünnschichtplatte die Substanzmenge aus einem sehr kleinen und räumlich eng begrenzten Oberflächenbereich der Dünnschichtplatte herausgelöst und durch die Kanüle hindurch der Probenkammer zugeführt wird.

Die Probenkammer kann ein unmittelbar mit der Kanüle verbundener Behälter sein. Die Kanüle kann dabei dauerhaft oder aber lösbar mit dem Behälter verbunden sein. Es ist ebenfalls möglich, dass die Probenkammer ein in die Kanüle integrierter Bereich bzw. ein Abschnitt der Kanüle ist, in welchem die mit der Schneide an der Aufnahmeöffnung abgetragene und durch die Aufnahmeöffnung in die Kanüle eingebrachte Substanzmenge gesammelt werden kann.

Die Kanüle ist dabei während eines Abtragungsvorgangs zweckmäßigerweise unmittelbar oberhalb der Oberfläche der Dünnschichtplatte angeordnet, so dass die mit der Schneide aus der Dünnschichtplatte herausgetrennte Substanzmenge im Wesentlichen vollständig durch die Aufnahmeöffnung in die Kanüle und anschließend durch die Kanüle in die Probenkammer transportiert wird. Auf diese Weise wird bereits ohne zusätzliche Maßnahmen erreicht, dass lediglich ein verschwindend kleiner Anteil der aus der aus der Dünnschichtplatte herausgetrennten Substanzmenge nicht durch die Auffangöffnung der Kanüle erfasst wird, sondern für die anschließende Analyse verlorengehen kann. Um die Gefahr zu verringern, dass einzelne Partikel der Substanzmenge, die mit der Schneide von der Oberfläche der Dünnschichtplatte abgetragen werden, nicht durch die Aufnahmeöffnung in die Kanüle und anschließend in die Probenkammer gelangen, kann die Dünnschichtplatte mit der die analysierende Probe enthaltenden Oberfläche nach unten angeordnet und die Kanüle mit der Schneide von unten an die Dünnschichtplatte herangeführt werden. Die mit der Schneide von der Dünnschichtplatte abgetragenen Partikel der Substanzmenge fallen auf Grund der Schwerkraft nach unten in die dort angeordnete Kanüle.

Um eine möglichst vollständige Erfassung der von der Dünnschichtplatte abgetragenen Substanzmenge mit der Kanüle zu begünstigen ist gemäß einer Ausgestaltung des Erfindungsgedankens vorgesehen, dass in der Probenkammer ein Unterdruck erzeugt wird, um die mit der Kanüle von der Dünnschichtplatte abgetragene Substanzmenge durch die Aufnahmeöffnung der Kanüle anzusaugen und durch die Kanüle in die Probenkammer zu saugen. Durch den in der Probenkammer erzeugten Unterdruck wird eine Sogwirkung erzeugt, durch welche Luft in der Umgebung der Aufnahmeöffnung der Kanüle angesaugt und durch Kanüle hindurch in die Probenkammer gesaugt wird. Dabei werden die mit der an der Aufnahmeöffnung der Kanüle angeordneten Schneide von der Dünnschichtplatte abgetrennten Partikel der Substanzmenge erfasst und durch die Kanüle in die Probenkammer eingesaugt. Die Probenkammer ist durch eine geeignete Filtereinrichtung von einer Vakuumerzeugungsvorrichtung getrennt, so dass die in die Probenkammer eingesaugten Partikel der Substanzmenge dort zurückgehalten werden.

Unabhängig davon, ob die Erfassung der abgetragenen Substanzmenge durch die Kanüle mit einem Unterdruck unterstützt wird oder nicht, ist es mit dem erfindungsgemäßen Verfahren möglich, eine geringe Substanzmenge der zu analysierenden Probe von einem räumlich eng begrenzten Analysebereich auf der Dünnschichtplatte abzutragen und der Probenkammer zuzuführen. Untersuchungen haben beispielsweise ergeben, dass es bei einer geeigneten Ausgestaltung der Schneide und der Kanüle ohne weiteres möglich ist, mit der Schneide dünne Streifen der zu analysierenden Probe mit einer Breite von weniger als 0,5 mm oder sogar von weniger als 0,3 mm aus der Dünnschichtplatte abzutrennen und die dabei abgetrennte Substanzmenge im Wesentlichen vollständig durch die Kanüle der Probenkammer zuzuführen. Ein derartiger Streifen kann eine sehr kurze Länge von 1 mm oder weniger aufweisen. Die Länge des Streifens kann auch beispielsweise 5 mm oder 10 mm lang sein. In vorteilhafter Weise ist die Länge des Streifens an eine Breite einer Trennstrecke angepasst, die bei gängigen Dünnschichtplatten beispielsweise 4 mm betragen kann. Mit einem 5 mm oder 6 mm langen Streifen, der quer zu dem Verlauf der Trennstrecke ausgerichtet ist, kann dann ein Analysenbereich abgetragen werden, der sich über die gesamte Breite der Trennstrecke erstreckt. Auf diese Weise können auch quantitative Analysen durchgeführt werden.

Dabei kann die Schneide mit einer Geschwindigkeit von mehr als 10 mm, bevorzugt mehr als 20 mm oder sogar mehr als 25 mm pro Sekunde, beispielsweise zwischen 10 und 40 mm pro Sekunde, über die Oberfläche der Dünnschichtplatte verlagert werden, so dass die für das Abtragen derjenigen Substanzmenge, die für eine Analyse benötigt wird, insgesamt erforderliche Zeitdauer sehr gering und im Bereich von wenigen Sekunden gehalten werden kann. Die Geschwindigkeit kann auch deutlich geringer vorgegeben werden und beispielsweise weniger als 10 mm oder weniger als 5 mm pro Sekunde, beispielsweise zwischen 0,5 und 10 mm pro Sekunde, betragen. Insbesondere bei einer geringen Länge des Streifens oder einer im Wesentlichen punktförmigen Abtragung der Substanzmenge von der Dünnschichtplatte kann auch eine Geschwindigkeit von 1 mm pro Sekunde oder geringer zweckmäßig sein. Insgesamt ist die Geschwindigkeit, mit der die Schneide über die Oberfläche der Dünnschichtplatte verlagert wird also dem Abtrageproblem angepasst frei wählbar, typischerweise in einem Bereich zwischen 0,5 mm und 100 mm pro Sekunde, bevorzugt zwischen 1 und 40 mm pro Sekunde.

Um eine größere Substanzmenge von der Dünnschichtplatte abzutragen, können mit der Schneide mehrere nebeneinander angeordnete Streifen nacheinander abgetragen werden und dadurch eine vorgegebene Analysefläche auf der Dünnschichtplatte vollständig abgetragen werden. Es ist ebenfalls möglich, mehrere Kanülen und Probenkammern mit jeweils einer oder mehreren Schneiden nebeneinander anzuordnen, um gleichzeitig mehrere Abtragungsvorgänge durchzuführen.

Um sowohl sehr kleine Substanzmengen in einem räumlich eng begrenzten Analysenbereich als auch im Vergleich dazu sehr große Substanzmengen in einem deutlich größeren Analysenbereich in einer jeweils möglichst geringen Verfahrensdauer von der Dünnschichtplatte abtragen zu können kann es zweckmäßig sein, mehrere verschiedene Kanülen mit unterschiedlich breiten Schneiden bereitzuhalten und die für die jeweiligen Vorgaben am besten geeignete Kanüle mit der zugeordneten Schneide zu verwenden. Es ist ebenfalls möglich, im Falle einer gesondert hergestellten und an der Kanüle angeordneten Schneide lediglich die Schneide auszuwechseln und an den jeweiligen Analysebereich auf der Dünnschichtplatte anzupassen.

Um die in der Probenkammer gesammelte Substanzmenge in vorteilhafter Weise aufbewahren und zu gegebener Zeit einer Messapparatur zuführen zu können ist optional vorgesehen, dass die Probenkammer nach dem Abtragen und Zuführen der Substanzmenge mit einem Lösungsmittel befüllt wird, um die Substanzmenge in eine Lösung zu überführen. Zu diesem Zweck kann beispielsweise die Probenkammer in einem Eingangsbereich zu der Kanüle verschlossen werden, um ein unbeabsichtigtes Austreten des Lösungsmittels und insbesondere der in der Probenkammer gesammelten Substanzmenge verhindern. Es ist ebenfalls möglich, die Kanüle an deren Aufnahmeöffnung zu verschließen und zusammen mit der Probenkammer mit dem Lösungsmittel zu befüllen. Gegebenenfalls kann auch bei einer geeigneten Ausrichtung der Probenkammer und der damit verbundenen Kanüle die unverschlossene Probenkammer mit Lösungsmittel befüllt werden, wobei die Aufnahmeöffnung der Kanüle so nach oben ausgerichtet und das Lösungsmittelvolumen so vorgegeben ist, dass auch aus einer unverschlossenen Probenkammer kein Lösungsmittel und insbesondere keine darin gesammelte Substanzmenge austritt. Die in dem Lösungsmittel gelöste Substanzmenge kann in der Probenkammer verbleiben und zu gegebener Zeit aus der Probenkammer unmittelbar in eine Messapparatur befüllt werden. Es ist ebenfalls möglich, die in dem Lösungsmittel gelöste Substanzmenge aus der Probenkammer heraus in einen Vorratsbehälter umzufüllen, um die gelöste Substanzmenge zu lagern und aufzubewahren, bis zu gegebener Zeit mit einer geeigneten Messapparatur die Analyse vorgenommen werden kann. Es ist ebenfalls denkbar, dass die Probenkammer lösbar mit der Kanüle verbunden ist und nach der Befüllung mit der Substanzmenge und vor der Befüllung mit dem Lösungsmittel, gegebenenfalls auch nach der Befüllung mit dem Lösungsmittel von der Kanüle getrennt und ausgewechselt wird und anschließend als Transport- und Vorratsbehälter für die darin gesammelte Substanzmenge dienen kann.

Um eine Verunreinigung einer nachfolgenden Abtragung einer Substanzmenge von der Dünnschichtplatte durch eine vorausgegangene Abtragung einer anderen Substanzmenge von der Dünnschichtplatte zu vermeiden ist vorgesehen, dass die Probenkammer und die Kanüle mit einem Reinigungsmittel gereinigt werden können. Die Probenkammer und die Kanüle können zu diesem Zweck beispielsweise unmittelbar im Anschluss an die vorausgegangene Abtragung einer Substanzmenge oder aber unmittelbar vor Beginn der Abtragung einer nachfolgenden Substanzmenge mit dem Reinigungsmittel gereinigt werden. Als Reinigungsflüssigkeit kann beispielsweise das gleiche Lösungsmittel verwendet werden, mit welchem die in der Probenkammer gesammelte Substanzmenge in eine Lösung überführt wird. Es ist ebenfalls denkbar, dass ein von diesem Lösungsmittel unterschiedliche Reinigungsflüssigkeit verwendet wird. Weiterhin kann es zweckmäßig sein, dass zur Reinigung der Probenkammer und der Kanüle zunächst eine oder mehrere Reinigungsflüssigkeiten durch die Probenkammer und die Kanüle gespült werden, und anschließend eventuell verbleibende Reste der Reinigungsflüssigkeit und insbesondere der vorausgehend abgetragenen Substanzmenge mit Druckluft oder einem anderen geeigneten Reinigungsgas auszublasen. Falls die Probenkammer lösbar mit der Kanüle verbunden ist und nach einer Ansammlung der abgetragenen Substanzmenge als Vorratsbehälter für die betreffende Substanzmenge verwendet wird, kann auch lediglich die Kanüle mit Reinigungsflüsigkeit und/oder einem Reinigungsgas gereinigt werden, um anschließend mit einer neuen Probenkammer verbunden zu werden.

Gemäß einer Ausgestaltung des Erfindungsgedankens ist vorgesehen, dass die Kanüle mit der Schneide entgegen einer Federkraft ausgelenkt wird oder dass die Schneide an der Aufnahmeöffnung der Kanüle entgegen einer Federkraft relativ zu der Aufnahmeöffnung der Kanüle ausgelenkt wird, um während des Abtragens der Substanzmenge von der Dünnschichtplatte zu verhindern, dass die Schneide mit einem übermäßigen Anpressdruck in die Dünnschichtplatte eindringt. Für die Entnahme der Substanzmenge von der Dünnschichtplatte sollte die Schneide die Trennschicht möglichst vollständig abtragen. Bei üblichen Dünnschichtplatten beträgt eine Dicke der Trennschicht beispielsweise 200 µm und bei sehr dünnen Trennschichten etwa 100 µm. Mit der Schneide und Vorrichtung der vorliegenden Erfindung können jedoch auch dickere Trennschichten oder aber wesentlich dünnere Trennschichten mit einer Dicke von weniger al 80 µm oder sogar von weniger als 50 µm, beispielsweise zwischen 30 und 200 µm, zuverlässig und vollständig abgetragen werden. Bei derart dünnen Trennschichten würde beispielsweise das Anpressen eines Hohlzylinders mit einer ringförmigen Dichtung nicht mehr funktionieren, da in einer derart dünnen Trennschicht keine ausreichende Komprimierung des Trennschichtmaterials und damit keine zuverlässige Abdichtung durch die angepresste ringförmige Dichtung erfolgen kann.

Bei einer Verlagerung der Schneide relativ zu der Oberfläche der Dünnschichtplatte sollte jedoch vermieden werden, dass die Schneide mit einem übermäßigen Anpressdruck in die Dünnschichtplatte eindringt und dabei beispielsweise über die Trennschicht hinaus in die Trägerplatte eindringt oder auf der Trägerplatte entlang kratzt, um eine Beschädigung der Dünnschichtplatte sowie eine gegebenenfalls drohende Verunreinigung der abgetragenen Substanzmenge oder eine unerwünschte Beschädigung der Schneide oder der Kanüle zu vermeiden.

Die auf die Schneide ausgeübte Federkraft wird dabei zweckmäßigerweise so vorgegeben, dass die Schneide mit einem ausreichend hohen Anpressdruck auf der Oberfläche der Dünnschichtplatte anliegt, um bei einer Verlängerung der Schneide quer zu der Oberfläche in die Trennschicht einzudringen und die gewünschte Substanzmenge abtragen zu können. Die Federkraft ist gleichzeitig in vorteilhafter Weise ausreichend gering vorgegeben, um bei einem unerwünschten Kontakt mit der Trägerplatte der Dünnschichtplatte eine senkrecht zu der Trägerplatte gerichtete Verlagerung der Schneide zu ermöglichen und eine Beschädigung der Dünnschichtplatte zu verhindern. Mit einer geeignet ausgestalteten Federeinrichtung kann in einfacher Weise eine Anpassung an Trennschichten aus unterschiedlichen Materialien und mit unterschiedlicher Dicke vorgenommen werden.

Die Schneide bzw. die Kanüle kann zu diesem Zweck um eine horizontal ausgerichtete Schwenkachse verlagerbar an einer geeigneten Haltevorrichtung angeordnet sein. Es ist ebenfalls denkbar, dass die Schneide bzw. die Kanüle in einer senkrecht oder in einem Winkel zu der Dünnschichtplatte gerichteten Zwangsführung gelagert sind und in dieser Zwangsführung mit einer Federkraft einer geeigneten Federeinrichtung beaufschlagt sind.

Gemäß einer vorteilhaften Ausgestaltung des Erfindungsgedankens ist vorgesehen, dass mit einer Verlagerungseinrichtung die Kanüle und die Oberfläche der Dünnschichtplatte relativ zueinander verlagert werden, um die Substanzmenge von der Dünnschichtplatte abzutragen. Die Verlagerungseinrichtung kann beispielsweise ein automatisiert verfahrbarer X-Y-Tisch sein, auf welchem die Dünnschichtplatte angeordnet und festgelegt werden kann.

Durch eine geeignete Ansteuerung und Verlagerung des X-Y-Tisches kann die Dünnschichtplatte dann relativ zu einer ortsfest angeordneten Kanüle und der zugeordneten Schneide verlagert werden. Die Kanüle mit der Schneide oder aber der X-Y-Tisch können dann zweckmäßigerweise relativ zueinander aufeinander zu oder voneinander wegbewegt werden, um zunächst beabstandet voneinander einen Analysenbereich auf der Oberfläche der Dünnschichtplatte an die Kanüle heran zu verfahren. Anschließend kann die Dünnschichtplatte an die Schneide herangefahren werden und der Abstand voneinander bis zu einem Kontakt bzw. Eindringen der Schneide in die Trennschicht der Dünnschichtplatte verringert werden, um bei einem anschließenden Verfahren der Dünnschichtplatte quer zu der Kanüle mit der Schneide die gewünschte Substanzmenge aus der Dünnschichtplatte abzutragen.

Es ist ebenfalls zweckmäßig und für eine automatisierte Abtragung der gewünschten Substanzmenge vorteilhaft, dass die Kanüle mit der Schneide an einem geeigneten Verlagerungskopf angeordnet sind, der relativ zu einer ortsfest angeordneten Dünnschichtplatte zumindest parallel zu der Oberfläche der Dünnschichtplatte und in vorteilhafter Weise auch senkrecht zu der Dünnschichtplatte automatisiert verfahren werden kann. Bei einer derartigen Ausgestaltung kann die Probenkammer starr mit der Kanüle oder mit dem Verlagerungskopf verbunden sein oder aber über eine flexible Verbindungsleitung mit der verfahrbaren Kanüle verbunden und gleichzeitig ortsfest an einer geeigneten Aufnahme- bzw. Lagerungseinrichtung festgelegt sein.

Um eine weitgehend automatisierte Probenanalyse zu ermöglichen ist zweckmäßigerweise optional vorgesehen, dass mit einer optischen Erfassungseinrichtung eine optische Abbildung der die zu analysierende Probe aufweisenden Oberfläche der Dünnschichtplatte erzeugt wird und dass mit einer Auswerteeinrichtung ein Bereich auf der Oberfläche der Dünnschichtplatte vorgegeben wird, innerhalb dessen mit der Verlagerungseinrichtung die Kanüle relativ zu der Oberfläche der Dünnschichtplatte verlagert wird, um die Substanzmenge von der Dünnschichtplatte abzutragen. Die optische Erfassungseinrichtung kann beispielsweise eine streifenförmige oder matrixförmige CCD-Kamera oder CMOS-Kamera aufweisen, mit welcher eine optische Abbildung der Oberfläche der Dünnschichtplatte aufgenommen werden kann. Um die Aufnahmequalität zu steigern und durch eine möglichst übereinstimmende Ausleuchtung eine Vergleichbarkeit der optischen Aufnahmen zu ermöglichen kann der von der optischen Abbildung erfasste Bereich mit einer geeignet ausgestalteten Beleuchtungseinrichtung ausgeleuchtet werden.

Es ist ebenfalls möglich und für bestimmte Analysen vorteilhaft, die Oberfläche der Dünnschichtplatte mit UV-Licht oder mit Infrarotlicht zu beleuchten und das von der Oberfläche der Dünnschichtplatte abgestrahlte Licht mit der optischen Erfassungseinrichtung zu erfassen und in eine geeignete Abbildung zu überführen. Auf diese Weise können auch Lumineszenzeffekte erzeugt und für die Auswertung verwendet werden. Diejenigen Bereiche in der Trennstrecke der Dünnschichtplatte, in denen sich eine sichtbare oder anderweitig erfassbare Konzentration der zu analysierenden Probe befindet, können mit einem geeigneten Algorithmus automatisiert, identifiziert und für eine nachfolgende Abtragung der Substanzmenge in den einzelnen räumlich voneinander abgegrenzten Bereichen ausgewählt werden. Auf diese Weise kann eine Oberfläche der Dünnschichtplatte ausgehend von einer in geeigneter Weise erzeugten optischen Abbildung vollständig ausgewertet werden, um im Anschluss daran in den automatisiert identifizierten Analysebereichen jeweils in gesonderten Abtragungsschritten die jeweils gewünschte Substanzmenge abzutragen und einer gesonderten Analyse zuzuführen.

Offenbart ist auch eine Vorrichtung zur Bereitstellung einer Substanzmenge einer zu analysierenden Probe von einer Dünnschichtplatte bei der Dünnschicht-Chromatografie, wobei die Vorrichtung eine Abtragungsvorrichtung zum Abtragen der Substanzmenge von der Dünnschichtplatte und eine Probenkammer aufweist, in welcher die Substanzmenge gesammelt und für eine nachfolgende Analyse bereitgestellt werden kann. Erfindungsgemäß ist vorgesehen, dass die Abtragungsvorrichtung eine Kanüle mit einer an eine Aufnahmeöffnung der Kanüle angeordneten Schneide aufweist und die Kanüle über eine optionale Verbindungseinrichtung mit der Probenkammer verbunden ist. Die Probenkammer kann ein unmittelbar mit der Kanüle verbundener Behälter sein. Die Kanüle kann dabei dauerhaft oder aber lösbar mit dem Behälter verbunden sein. Es ist ebenfalls möglich, dass die Probenkammer ein in die Kanüle integrierter Bereich bzw. ein Abschnitt der Kanüle ist, in welchem die mit der Schneide an der Aufnahmeöffnung abgetragene und durch die Aufnahmeöffnung in die Kanüle eingebrachte Substanzmenge gesammelt werden kann. Die Länge der Kanüle ist je nach Ausführungsform der Vorrichtung anpassbar und kann beispielsweise zwischen 5 mm und 50 cm liegen.

Die optionale Verbindungseinrichtung, mit welcher die Kanüle mit der Probenkammer verbunden ist, kann beispielsweise ein Adapter oder eine Öffnung sein, durch welche die Kanüle in die Probenkammer ragt. Es ist ebenfalls denkbar, dass die Kanüle über eine formstabile oder aber eine flexible Verbindungsleitung mit der Probenkammer verbunden ist.
Mit der an der Aufnahmeöffnung der Kanüle angeordneten Schneide kann von einem Bereich der Trennschicht der Dünnschichtplatte eine Substanzmenge mit einer zu analysierenden Probe abgetrennt bzw. abgekratzt werden. Die dabei üblicherweise in Form von kleinen Partikeln abgetragene Substanzmenge kann durch die Kanüle und über die Verbindungseinrichtung der Probenkammer zugeführt werden. Ein unerwünschter Verlust der von der Dünnschichtplatte abgetragenen Substanzmenge kann durch eine geeignete Ausgestaltung der Kanüle und insbesondere der Aufnahmeöffnung und durch eine geeignete Anordnung der Schneide relativ zu der Aufnahmeöffnung weitgehend unterbunden werden.

Gemäß einer vorteilhaften Ausgestaltung des Erfindungsgedankens ist vorgesehen, dass die Schneide einen Rand der Aufnahmeöffnung der Kanüle bildet. Ein der Probenkammer abgewandtes Ende der Kanüle kann beispielsweise einen schrägen Schliff aufweisen, der zumindest längs eines Teilabschnitts eines Umfangsrandes des schrägen Schliffs eine Schneide bildet. Es ist ebenfalls denkbar, dass die Kanüle an ihrem der Probenkammer abgewandten Ende senkrecht abgeschnitten bzw. abgetrennt ist und längs des Umfangsrands mindestens eine sich über einen Teilbereich des Umfangsrands erstreckende Schneide aufweist. Dabei kann die Kanüle vorzugsweise eine kreisförmige Querschnittsfläche, aber auch eine ovale, rechteckige oder nahezu beliebig geformte Querschnittsfläche aufweisen.

Da bei den vorangehend geschilderten Ausgestaltungen die Schneide einen Rand der Aufnahmeöffnung der Kanüle bildet, kann durch eine geeignete Verlagerung der Kanüle über die Oberfläche der Dünnschichtplatte während des Abtragens der Substanzmenge von der Dünnschichtplatte erreicht werden, dass die abgetragene Substanzmenge durch die Aufnahmeöffnung in die Kanüle eingeführt bzw. hineingeschoben wird. Gegebenenfalls kann die Oberfläche der Dünnschichtplatte senkrecht oder in einem Winkel zu einer waagrechten Ausrichtung ausgerichtet sein, so dass bereits abgetrennte Partikel durch die Schwerkraft nach unten und in Richtung der zweckmäßigerweise dann dort angeordneten Aufnahmeöffnung der Kanüle fallen bzw. gleiten.

Gemäß einer optionalen Ausgestaltung des Erfindungsgedankens ist es ebenfalls denkbar, dass die Schneide beabstandet zu einem Rand der Aufnahmeöffnung der Kanüle angeordnet ist. Die Kanüle kann in diesem Fall als Hohlnadel oder als röhrenförmiger Hohlkörper ausgebildet sein. Eine Querschnittsfläche der Hohlnadel oder des Hohlkörpers kann nahezu beliebig vorgegeben sein. Die zweckmäßigerweise getrennt von der Kanüle hergestellte Schneide kann nachträglich im Bereich der Aufnahmeöffnung der Kanüle an der Kanüle festgelegt werden. Auf diese Weise ist es möglich, dass die Schneide aus einem anderen Material als die Kanüle besteht. Die Schneide kann bevorzugt aus einem besonders harten und widerstandsfähigen Material wie beispielsweise Metall hergestellt sein, während die Kanüle ebenso aus Metall bestehen kann oder aus einem kostengünstigen oder sogar elastischen oder flexiblen Material wie beispielsweise ein geeigneter und möglichst inerter Kunststoff hergestellt sein kann.

Zudem kann die Schneide nicht nur gesondert hergestellt sein, sondern auch lösbar bzw. auswechselbar an der Kanüle angeordnet sein. Es ist ebenfalls denkbar, dass mehrere Schneiden beispielsweise in einem Revolvermagazin oder in Umfangsrichtung beabstandet zueinander an der Kanüle angeordnet sind, so dass ein Wechsel zu einer anderen Schneide bzw. Schneidengeometrie ohne nennenswerten Zeitverlust durchgeführt werden kann.

Um eine möglichst zuverlässige, gleichmäßige und einfache Abtragung der Substanzmenge von der Dünnschichtplatte zu erleichtern, ist es einer Ausgestaltung des Erfindungsgedankens zufolge vorgesehen, dass die Schneide eine mindestens abschnittsweise geradlinig verlaufende Schneidkante aufweist. Die Schneide kann beispielsweise eine 0,5 mm oder 1 mm lange, typischerweise eine zwischen 0,3 und 5 mm, bevorzugt eine zwischen 0,5 und 2 mm lange, geradlinig verlaufende Schneidkante aufweisen. An den Rändern der geradlinig verlaufenden Schneidkante können quer zu der Schneidkante vorspringende Begrenzungselemente angeordnet sein, um die Abtrennung und Abtragung von streifenförmigen Substanzmengenbereichen zu begünstigen.

Um während einer Verlagerung der Kanüle mit der Schneide über die Dünnschichtplatte hinweg während eines Abtragungsvorgangs eine unerwünschte Beschädigung der Dünnschichtplatte oder ein übermäßig tiefes Eindringen der Schneide in die Dünnschichtplatte zu vermeiden, ist optional vorgesehen, dass die Kanüle mit der Schneide entgegen einer Federkraft an einer Stützeinrichtung abgestützt ist, oder dass die Schneide über eine Federeinrichtung relativ zu der Kanüle oder der Probenkammer abgestützt ist. Die Federeinrichtung kann beispielsweise eine Schraubenfeder sein, die bei einer Auslenkung einer schwenkbar oder translatorisch verlagerbaren Schneide auf Zug oder Druck beansprucht wird. Es sind ebenfalls Rotationsfedereinrichtungen bekannt, die bei einer durch ein Verschwenken der Schneide erzwungenen Drehbewegung eine Rückstellkraft erzeugen.

Falls die Schneide als Bestandteil der Kanüle ausgebildet ist und einen Rand der Aufnahmeöffnung der Kanüle bildet, kann die Kanüle mit der Schneide verlagerbar an einer Stützeinrichtung abgestützt sein und die Federeinrichtung bei einer Verlagerung der Kanüle relativ zu der Stützeinrichtung eine rückstellende Federkraft erzeugen. Falls die Schneide gesondert von der Kanüle hergestellt und dieser angebracht ist, kann die Kanüle ebenso mit der Schneide verlagerbar an einer Stützeinrichtung abgestützt sein und die Federeinrichtung bei einer Verlagerung der Kanüle relativ zu der Stützeinrichtung eine rückstellende Federkraft erzeugen. Es ist ebenfalls denkbar, dass lediglich die Schneide über eine geeignet ausgestaltete Federeinrichtung an der Kanüle, an der Probenkammer oder an einem gesonderten Stützelement abgestützt ist. Wenn die Kanüle mit deren Aufnahmeöffnung in einem geringen Abstand über die Oberfläche der Dünnschichtplatte verlagert wird, kann die beispielsweise schwenkbar oder axial verlagerbar an der Kanüle abgestützte Schneide federkraftbetätigt in die Trennschicht der Dünnschichtplatte eingedrückt werden und dadurch die Substanzmenge abgetragen und in die Kanüle eingebracht werden.

Im Zusammenhang mit dem vorangehend geschilderten erfindungsgemäßen Verfahren wurde bereits beschrieben, dass die Probenkammer optional eine Öffnung aufweisen kann, die mit einer Unterdruckerzeugungsvorrichtung verbunden ist. Die Probenkammer kann über dieselbe Öffnung oder eine weitere Öffnung auch mit einer Lösungsmittelbefüllungseinrichtung verbunden sein. Zudem kann die Probenkammer entweder ebenfalls über dieselbe Öffnung oder aber durch eine gesonderte Öffnung mit einer Reinigungsflüssigkeitbefüllungseinrichtung verbunden sein.

Diese eine Öffnung oder gegebenenfalls die mehreren Öffnungen, mit denen die Probenkammer mit weiteren Komponenten verbunden ist, sind gemäß einer Ausgestaltung des Erfindungsgedankens durch eine Filtereinrichtung verschlossen, welche die abgetragene und in die Probenkammer überführte Substanzmenge in der Probenkammer zurückhält. Die Filtereinrichtung kann beispielsweise eine Fritte aus Glas, Metall oder Keramik sein, wobei das Filtermaterial der Fritte Poren mit vorgegebenen Porenweiten aufweist, so dass die nach der Abtragung in der Probenkammer angesammelte Substanzmenge von der Fritte in der Porenkammer zurückgehalten wird, wenn die Porenkammer von Flüssigkeiten durchströmt wird. Anstelle einer Fritte können auch andere geeignete Siebe oder Siebmaterialien wie beispielsweise Netze oder Gitterstrukturen verwendet werden. Die Filtereinrichtung kann auch eine Membran oder aber einen Metallfilter beispielsweise aus einer gesinterten porösen Metallstruktur aufweisen.

Zweckmäßigerweise ist optional vorgesehen, dass mit einer Verlagerungseinrichtung die Kanüle mit der Schneide und eine Oberfläche der Dünnschichtplatte relativ zueinander verlagerbar sind. Die Verlagerungseinrichtung kann dabei entweder nur die Kanüle und die Schneide über die Oberfläche der Dünnschichtplatte verlagern oder aber die Probenkammer mit der starr daran befestigten Kanüle und Schneide relativ zu der Oberfläche der Dünnschichtplatte verlagern und bewegen. Die Verlagerungseinrichtung kann beispielsweise ein in einer Ebene oder in allen drei Raumrichtungen verlagerbaren Schlitten oder Verlagerungskopf aufweisen. Es ist auch denkbar, dass die Verlagerungseinrichtung eine in einer Ebene oder in allen drei Raumrichtungen verlagerbaren Aufnahmetisch zur Aufnahme der Dünnschichtplatte aufweist. Eine auf dem Aufnahmetisch festgelegte Dünnschichtplatte kann dann in der gewünschten Art und Weise zusammen mit dem Aufnahmetisch relativ zu der ortsfest angeordneten Kanüle verlagert werden. Es ist ebenfalls denkbar, dass die Vorrichtung mehrere Kanülen mit damit verbundenen Probenkammern aufweist, die unabhängig voneinander gleichzeitig über voneinander beabstandete Bereiche der Dünnschichtplatte verlagert werden können und gleichzeitig jeweils eine Substanzmenge für eine zu analysierende Probe abtragen können.

Im Hinblick auf eine für viele Anwendungen vorteilhafte automatische Erfassung der Analysenbereiche, in denen jeweils eine Substanzmenge für eine nachfolgende Probenanalyse abgetragen werden soll, ist einer entsprechenden Ausgestaltung des Erfindungsgedankens zufolge vorgesehen, dass die Vorrichtung eine optische Erfassungseinrichtung zur Erfassung einer optischen Abbildung der Oberfläche der Dünnschichtplatte und eine Auswerteeinrichtung aufweist, mit welcher ein Analysenbereich auf der Oberfläche der Dünnschichtplatte vorgegeben werden kann, innerhalb dessen mit der Verlagerungseinrichtung die Kanüle relativ zu der Oberfläche der Dünnschichtplatte automatisiert verlagert wird, um die Substanzmenge von der Dünnschichtplatte abzutragen.

Nachfolgend werden exemplarisch einige Ausführungsbeispiele der Erfindung näher erläutert, die in der Zeichnung schematisch dargestellt sind. Es zeigt:
Figur 1 eine schematische Darstellung einer Vorrichtung zur Bereitstellung einer Substanzmenge einer zu analysierenden Probe von einer Dünnschichtplatte, wobei lediglich eine Kanüle und eine Probenkammer während eines Abtragungsvorgangs der Substanzmenge von der Dünnschichtplatte gezeigt sind,
Figur 2 eine schematische Darstellung einer abweichend zu Figur 1 ausgestalteten Vorrichtung,
Figur 3 eine schematische Darstellung einer wiederum abweichend zu den Figuren 1 und 2 ausgestalteten Vorrichtung,
Figur 4 eine schematische Darstellung einer Verlagerungseinrichtung, mit welcher während eines Abtragungsverfahrens der Substanzmenge die Kanüle relativ zu der Dünnschichtplatte automatisiert verlagert werden kann, und
Figur 5 eine schematische Darstellung der mit der Kanüle verbundenen Probenkammer, die über Ventile mit einer Unterdruckerzeugungsvorrichtung, mit einer Lösungsmittelbefüllungsvorrichtung und mit einem Messgerät verbunden ist.

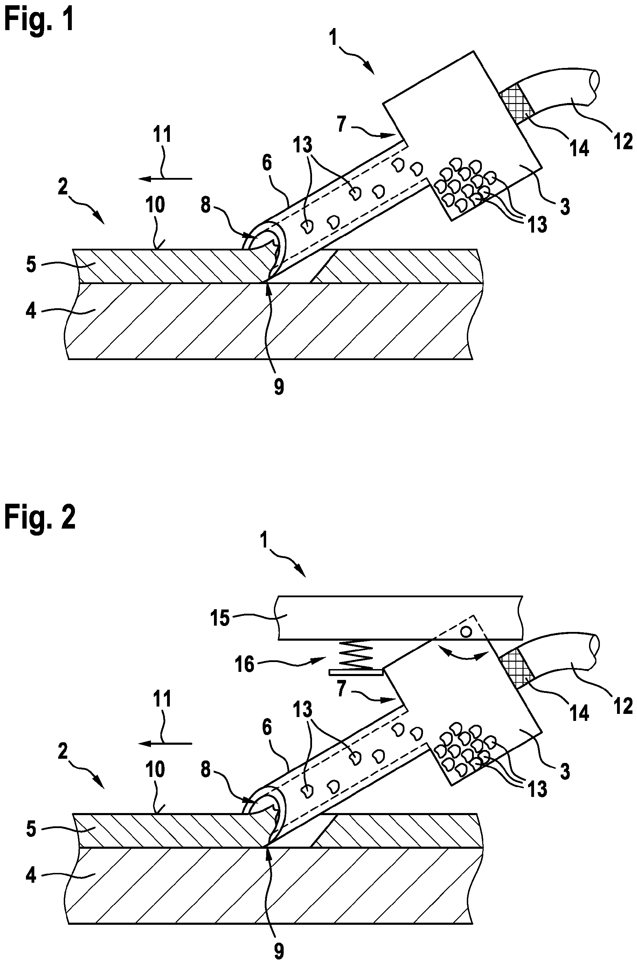

In den Figuren 1 bis 5 sind verschiedene Ausgestaltungen einer Vorrichtung 1 dargestellt, mit welcher eine Substanzmenge einer zu analysierenden Probe von einer Dünnschichtplatte 2 abgetragen und einer Probenkammer 3 zugeführt werden kann. Die Dünnschichtplatte 2 weist eine formstabile Trägerplatte 4 auf, auf welcher eine Trennschicht 5 aus einem geeigneten Trennmaterial, beispielsweise aus Kieselgel aufgebracht ist. Die zu analysierende Probe ist auf die Dünnschichtplatte 2 aufgetragen und mit Hilfe eines üblichen Trennverfahrens in einer in der Trennschicht 5 erzeugten Trennstrecke räumlich aufgetrennt worden.

Die Probenkammer 3 kann mit einem in den Figuren nicht dargestellten Messgerät verbunden werden, um die in der Probenkammer 3 gesammelte Substanzmenge dem Messgerät zuzuführen. Die Substanzmenge kann auch in der Probenkammer 3 transportiert und aufbewahrt werden, um zu einem späteren Zeitpunkt eine Auswertung der Substanzmenge zu ermöglichen.

Bei dem in Figur 1 exemplarisch dargestellten Ausführungsbeispiel weist die Vorrichtung 1 eine Kanüle 6 mit einer kreisförmigen Querschnittsfläche auf. Die Kanüle 6 mündet an einem Ende 7 in die damit verbundene Probenkammer 3. An einem der Probenkammer 3 abgewandten Ende weist die Kanüle 6 eine Aufnahmeöffnung 8 mit einem schrägen Schliff auf. Ein Umfangsrand der Aufnahmeöffnung 8 bildet in einem Umfangsabschnitt eine Schneide 9. Die Schneide 9 weist über eine Länge von etwa 0,5 mm einen geraden Verlauf auf.

Um in einem vorgegebenen Analysebereich der Dünnschichtplatte 2, beispielsweise in einem rechteckigen Bereich von 1 mm x 20 mm auf einer Oberfläche 10 der Dünnschichtplatte 2 die für nachfolgende Analysen benötigte Substanzmenge abzutragen wird die Kanüle 6 mit der damit verbundenen Probenkammer 3 an die Oberfläche 10 der Dünnschichtplatte 2 herangeführt, bis die Kanüle 6 mit der Schneide 9 in die Trennschicht 5 eindringt. Anschließend wird die Kanüle 6 mit der der Trägerplatte 4 zugewandten Schneide 9 quer zu der Oberfläche 10 in einer durch einen Pfeil 11 angedeuteten Abtragungsrichtung verlagert, wobei das Material der Trennschicht 5 mit der darin befindlichen Substanzmenge der zu analysierenden Probe abgetragen und durch die Aufnahmeöffnung 8 der Kanüle 6 in die Kanüle 6 hinein und anschließend in die Probenkammer 3 befördert wird. Zu diesem Zweck ist die Probenkammer 3 über eine Verbindungsleitung 12 mit einer nicht näher dargestellten Unterdruckerzeugungsvorrichtung verbunden, mit welcher ein Unterdruck in der Probenkammer 3 erzeugt wird, sodass mit der Schneide 9 von der Dünnschichtplatte 2 abgetragene Partikel 13 der Trennschicht 5 in die Kanüle 6 eingesaugt und durch die Kanüle 6 hindurch in die Probenkammer 3 eingesaugt werden. Durch eine in einem Übergangsbereich der Probenkammer 3 in die Verbindungsleitung 12 angeordnete Fritte 14 wird verhindert, dass die in die Probenkammer 3 eingesaugten und dort gesammelten Partikel 13 der Substanzmenge von der Unterdruckerzeugungsvorrichtung aus der Probenkammer 3 abgesaugt werden.

Bei dem in Figur 2 dargestellten Ausführungsbeispiel ist die Probenkammer 3 mit der daran befestigten Kanüle 6 schwenkbar an einer nicht näher dargestellten Stützvorrichtung 15 gelagert. Dabei wird mit einer Federeinrichtung 16 eine Federkraft erzeugt, welche die Probenkammer 3 mit der daran angeordneten Kanüle 6 von der Stützvorrichtung 15 weg in Richtung der Dünnschichtplatte 2 drückt. Falls die Probenkammer 3 mit der Kanüle 6 beispielsweise versehentlich zu nah an die Dünnschichtplatte 2 herangeführt werden, kann die Kanüle 6 entgegen der von der Federeinrichtung 16 erzeugten Federkraft in Richtung der Stützvorrichtung 15 von der Dünnschichtplatte 2 weg verschwenkt werden und dadurch vermieden werden, dass die Kanüle 6 mit einem übermäßig großen Anpressdruck auf die Trägerplatte 4 einwirkt und diese dabei beschädigt. Die in Figur 2 lediglich exemplarisch und schematisch dargestellte Anordnung der Probenkammer 3 und der Federeinrichtung 16 an der Stützvorrichtung 15 kann für einen Fachmann ohne weiteres ersichtlich auch auf andere Weise konstruktiv umgesetzt werden.

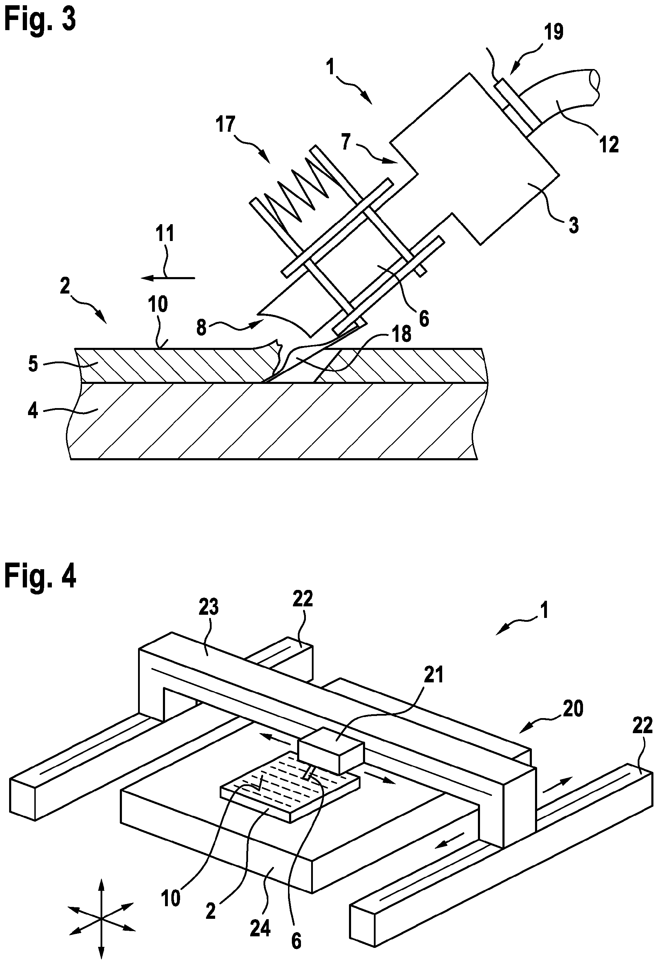

Bei dem in Figur 3 exemplarisch dargestellten Ausführungsbeispiel weist die Kanüle 6 eine gesondert hergestellte und über eine Federeinrichtung 17 an der Kanüle 6 axial verlagerbar gelagerte Schneide 18 auf. Die Schneide 18 ist aus einem anderen Material als die Kanüle 6 hergestellt. Die Kanüle 6 weist an der Aufnahmeöffnung 8 keinen schrägen Schliff und keine weitere Schneide auf. Durch die Verwendung einer gesonderten Schneide 18 kann ein Durchmesser der Kanüle 6 unabhängig von einer Länge der Schneide 18 vorgegeben werden, sodass beispielsweise eine vergleichsweise kurze Schneide 18 mit einer Länge von etwa 0,5 mm oder 1 mm mit einer Kanüle 6 kombiniert werden können, deren Aufnahmeöffnung 8 einen Durchmesser von mehreren Millimetern, beispielsweise 5 mm oder 10 mm aufweist. In Verbindung mit einem geeigneten Unterdruck kann auf diese Weise eine nahezu vollständige Erfassung der mit der Schneide 18 aus der Dünnschichtplatte 2 abgetrennten Substanzmenge gewährleistet werden und gleichzeitig der von der Schneide 18 erfasste Analysenbereich auf der Dünnschichtplatte 2 sehr klein vorgegeben werden, beispielsweise lediglich 0,5 mm x 5 mm betragen. Die Probenkammer 3 ist nicht über eine Fritte 14, sondern über eine geeignete Verschlusseinrichtung 19 mit einer Verbindungsleitung 12 zu einem nicht näher dargestellten Lösungsmittelbehälter verbunden. Für die Verbindung mit einer Unterdruckerzeugungsvorrichtung wird jedoch zweckmäßigerweise eine in Figur 3 nicht dargestellte Fritte verwendet.

Im Hinblick auf eine möglichst automatisierte Durchführung der Bereitstellung einer Substanzmenge einer zu analysierenden Probe von einer Dünnschichtplatte 2 kann die Kanüle 6 mit der Probenkammer 3 auch an einer in Figur 4 exemplarisch dargestellten Verlagerungseinrichtung 20 angeordnet sein. Die Verlagerungseinrichtung 20 weist einen Verlagerungskopf 21 auf, der an einem auf Schienen 22 geführten Portal 23 verlagerbar angeordnet ist. Die Kanüle 6 ist ihrerseits quer zu dem Portal 23 verlagerbar an dem Verlagerungskopf 21 angeordnet. Auf diese Weise kann die Kanüle 6 automatisiert in alle Raumrichtungen verlagert werden und von einer beispielsweise unterhalb des Verlagerungskopfes 21 ortsfest angeordneten Dünnschichtplatte 2 aus einem vorgegebenen kleinen Analysenbereich die für die Analyse erforderliche Substanzmenge abtragen.

Es ist ebenfalls denkbar und vereinfachend auch in Figur 4 dargestellt, dass alternativ oder zusätzlich dazu die Dünnschichtplatte 2 auf einem in einer Ebene oder in allen drei Raumrichtungen verlagerbaren Aufnahmetisch 24 festgelegt ist. Durch eine Verlagerung des Aufnahmetischs 24 kann die Dünnschichtplatte 2 relativ zu der entweder ortsfest oder ihrerseits verlagerbaren Kanüle 6 verlagert werden, um die Substanzmenge aus dem Analysenbereich der Dünnschichtplatte 2 abtragen zu können.

In dem Verlagerungskopf 21 können zusätzlich auch eine optische Erfassungseinrichtung und eine Auswerteeinrichtung angeordnet sein, mit welchen eine automatisierte Erfassung der Oberfläche 10 der Dünnschichtplatte 2 und eine Vorgabe von Analysenbereichen durchgeführt werden kann, in welchen anschließend eine automatisierte Abtragung der Substanzmengen für nachfolgende Analysen durchgeführt werden soll.

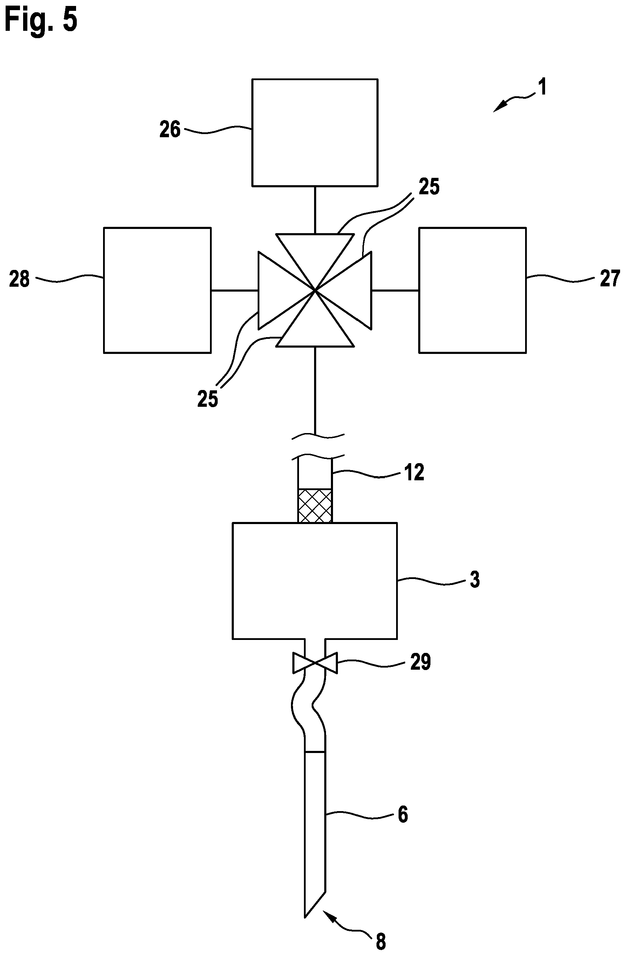

In Figur 5 ist exemplarisch dargestellt, dass die Probenkammer 3 über jeweils gesondert betätigbare Ventile 25 wahlweise mit einer Unterdruckerzeugungsvorrichtung 26, mit einer Lösungsmittelbefüllungseinrichtung 27 oder mit einem Messgerät 28 verbunden sein kann, um die abgetragene Substanzmenge durch Unterdruck in die Probenkammer 3 zu befördern, um die in der Probenkammer 3 befindliche Substanzmenge in einem geeigneten Lösungsmittel zu lösen, und um die gelöste Substanzmenge dem Messgerät 28 zuführen zu können. Dabei kann die Probenkammer 3 mit einem weiteren Ventil 29 oder einer Verschlusseinrichtung lösungsmitteldicht von der Kanüle 6 getrennt und dadurch verschlossen werden. Es ist ebenfalls möglich, dass die gelöste Substanzmenge nicht über die Verbindungsleitung 12, sondern durch die Kanüle 6 hindurch dem Messgerät 28 oder einem weiteren Transportbehälter zugeführt wird.

Mit der Vorrichtung 1 kann automatisiert aus einem sehr kleinen und räumlich präzise vorgegebenen Analysenbereich eine Substanzmenge von der Oberfläche 10 der Dünnschichtplatte 2 abgetragen werden. Mit Hilfe einer Federeinrichtung 16, 17 kann in einfacher Weise eine im Wesentlichen vollständige Abtragung der Trennschicht 5 erreicht und eine unerwünschte Beschädigung der Trägerplatte 4 vermieden werden. Bei einem Wechsel zu einer Dünnschichtplatte 2 mit anderen Eigenschaften, beispielsweise mit einer Trägerplatte 4 aus einem anderen Material oder mit einer unterschiedlich dicken Trennschicht 5 ist keine aufwendige Anpassung erforderlich. Mit Hilfe einer Verlagerungseinrichtung 20 kann in kurzer Zeit eine weitgehend automatisierte Bereitstellung einer großen Anzahl von Substanzmengen mit jeweils enthaltenen Probenmengen durchgeführt werden, mit welchen nachfolgend Analysen durchgeführt werden können.

Auch ohne weitere Ausführungen wird davon ausgegangen, dass ein Fachmann die obige Beschreibung im weitesten Umfang nutzen kann.

Bei etwaigen Unklarheiten versteht es sich von selbst, die zitierten Veröffentlichungen und Patentliteratur heranzuziehen.

## Patentansprüche

1. Verfahren zur Bereitstellung einer Substanzmenge einer zu analysierenden Probe von einer Dünnschichtplatte (2) bei der Dünnschicht-Chromatografie, wobei die Substanzmenge von der Dünnschichtplatte (2) abgetragen und einer Probenkammer (3) zugeführt wird, **dadurch gekennzeichnet, dass** die Substanzmenge mit einer an einer Aufnahmeöffnung (8) einer Kanüle (6) angeordneten Schneide (9, 18) von einer Oberfläche (10) der Dünnschichtplatte (2) abgetragen und durch die Kanüle (6) der mit der Kanüle (6) verbundenen Probenkammer (3) zugeführt wird.

2. Verfahren nach Anspruch 1, **dadurch gekennzeichnet, dass** in der Probenkammer (3) ein Unterdruck erzeugt wird, um die mit der Kanüle (6) von der Dünnschichtplatte (2) abgetragene Substanzmenge durch die Aufnahmeöffnung (8) in die Kanüle (6) anzusaugen und durch die Kanüle (6) in die Probenkammer (3) zu saugen.

3. Verfahren nach Anspruch 1 oder Anspruch 2, **dadurch gekennzeichnet, dass** die Probenkammer (3) nach dem Abtragen und Zuführen der Substanzmenge mit einem Lösungsmittel befüllt wird, um die Substanzmenge in eine Lösung zu überführen.

4. Verfahren nach einem oder mehreren der vorausgehenden Ansprüche, **dadurch gekennzeichnet, dass** die Kanüle (6) mit der Schneide (9, 18) entgegen einer Federkraft ausgelenkt wird oder dass die Schneide (18) an der Aufnahmeöffnung (8) der Kanüle (6) entgegen einer Federkraft relativ zu der Aufnahmeöffnung (8) der Kanüle (6) ausgelenkt wird, um während des Abtragens der Substanzmenge von der Dünnschichtplatte (2) zu verhindern, dass die Schneide (9, 18) mit einem übermäßigen Anpressdruck in die Dünnschichtplatte (2) eindringt.

5. Verfahren nach einem oder mehreren der vorausgehenden Ansprüche, **dadurch gekennzeichnet, dass** mit einer Verlagerungseinrichtung (20) die Kanüle (6) und die Oberfläche (10) der Dünnschichtplatte (2) relativ zueinander verlagert werden, um die Substanzmenge von der Dünnschichtplatte (2) abzutragen.

6. Verfahren nach Anspruch 5, **dadurch gekennzeichnet, dass** mit einer optischen Erfassungseinrichtung eine optische Abbildung der die zu analysierende Probe aufweisenden Oberfläche (10) der Dünnschichtplatte (2) erzeugt wird, und dass mit einer Auswerteeinrichtung ein Bereich auf der Oberfläche (10) der Dünnschichtplatte (2) vorgegeben wird, innerhalb dessen mit der Verlagerungseinrichtung (20) die Kanüle (6) relativ zu der Oberfläche (10) der Dünnschichtplatte (2) verlagert wird, um die Substanzmenge von der Dünnschichtplatte (2) abzutragen.

## Claims

1. Method for the provision of a sample of a specimen to be analysed of a thin-layer plate (2) in thin-layer chromatography, where the sample is removed from the thin-layer plate (2) and fed to a specimen chamber (3), **characterised in that** the sample is removed from a surface (10) of the thin-layer plate (2) by means of a blade (9, 18) disposed at a receiving opening (8) of a cannula (6) and is fed through the cannula (6) to the specimen chamber (3), which is connected to the cannula (6).

2. Method according to Claim 1, **characterised in that** a reduced pressure is generated in the specimen chamber (3) in order to suck the sample removed from the thin-layer plate (2) by means of the cannula (6) through the receiving opening (8) into the cannula (6) and through the cannula (6) into the specimen chamber (3).

3. Method according to Claim 1 or Claim 2, **characterised in that**, after the removal and feed of the sample, the specimen chamber (3) is filled with a solvent in order to dissolve the sample.

4. Method according to one or more of the preceding claims, **characterised in that** the cannula (6) with the blade (9, 18) is deflected against a spring force or **in that** the blade (18) at the receiving opening (8) of the cannula (6) is deflected against a spring force relative to the receiving opening (8) of the cannula (6) in order to prevent the blade (9, 18) from penetrating into the thin-layer plate (2) with an excessive contact pressure during removal of the sample from the thin-layer plate (2).

5. Method according to one or more of the preceding claims, **characterised in that** the cannula (6) and the surface (10) of the thin-layer plate (2) are displaced relative to one another by means of a displacement device (20) in order to remove the sample from the thin-layer plate (2).

6. Method according to Claim 5, **characterised in that** an optical image of the surface (10) of the thin-layer plate (2) containing the specimen to be analysed is generated by means of an optical recording device and **in that** an area on the surface (10) of the thin-layer plate (2) within which the cannula (6) is displaced relative to the surface (10) of the thin-layer plate (2) by means of the displacement device (20) in order to remove the sample from the thin-layer plate (2) is specified by means of an evaluation device.

## Revendications

1. Procédé pour la fourniture d'un échantillon d'un spécimen à analyser d'une plaque en couche mince (2) lors d'une chromatographie sur couche mince, dans lequel l'échantillon est enlevé hors de la plaque en couche mince (2) et est acheminé jusqu'à une chambre de spécimen (3), **caractérisé en ce que** l'échantillon est enlevé hors d'une surface (10) de la plaque en couche mince (2) au moyen d'une lame (9, 18) qui est disposée au niveau d'une ouverture de réception (8) d'une canule (6) et est acheminé au travers de la canule (6) jusqu'à la chambre de spécimen (3), laquelle est connectée à la canule (6).

2. Procédé selon la revendication 1, **caractérisé en ce qu'**une pression réduite est générée dans la chambre de spécimen (3) afin d'aspirer l'échantillon qui est enlevé hors de la plaque en couche mince (2) au moyen de la canule (6) au travers de l'ouverture de réception (8) à l'intérieur de la canule (6) et au travers de la canule (6) à l'intérieur de la chambre de spécimen (3).

3. Procédé selon la revendication 1 ou la revendication 2, **caractérisé en ce que**, après l'enlèvement et l'acheminement de l'échantillon, la chambre de spécimen (3) est remplie d'un solvant afin de dissoudre l'échantillon.

4. Procédé selon une ou plusieurs des revendications précédentes, **caractérisé en ce que** la canule (6) avec la lame (9, 18) est fléchie à l'encontre d'une force élastique ou **en ce que** la lame (18) au niveau de l'ouverture de réception (8) de la canule (6) est fléchie à l'encontre d'une force élastique en relation avec l'ouverture de réception (8) de la canule (6) afin d'empêcher que la lame (9, 18) ne pénètre à l'intérieur de la plaque en couche mince (2) avec une pression de contact excessive pendant l'enlèvement de l'échantillon hors de la plaque en couche mince (2).

5. Procédé selon une ou plusieurs des revendications précédentes, **caractérisé en ce que** la canule (6) et la surface (10) de la plaque en couche mince (2) sont déplacées l'une par rapport à l'autre au moyen d'un dispositif de déplacement (20) afin d'enlever l'échantillon hors de la plaque en couche mince (2).

6. Procédé selon la revendication 5, **caractérisé en ce qu'**une image optique de la surface (10) de la plaque en couche mince (2) qui contient le spécimen à analyser est générée au moyen d'un dispositif d'enregistrement optique et **en ce qu'**une zone sur la surface (10) de la plaque en couche mince (2) à l'intérieur de laquelle la canule (6) est déplacée par rapport à la surface (10) de la plaque en couche mince (2) au moyen du dispositif de déplacement (20) afin d'enlever l'échantillon hors de la plaque en couche mince (2) est spécifiée au moyen d'un dispositif d'évaluation.
